(19) Europäisches Patentamt
European Patent Office
Office européen des brevets

(11) **EP 4 538 695 A1**

(12) **EUROPEAN PATENT APPLICATION**

(43) Date of publication:
**16.04.2025 Bulletin 2025/16**

(21) Application number: **23202454.7**

(22) Date of filing: **09.10.2023**

(51) International Patent Classification (IPC):
**G01N 29/04** (2006.01)      **G01N 29/34** (2006.01)
**G01N 29/46** (2006.01)

(52) Cooperative Patent Classification (CPC):
**G01N 29/043; G01N 29/348; G01N 29/46;**
G01N 2291/0231; G01N 2291/0289

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nederlandse Organisatie voor
toegepast-natuurwetenschappelijk Onderzoek
TNO
2595 DA 's-Gravenhage (NL)**

(72) Inventors:
• **VROLIJK, Jan-Willem
2595 DA 's-Gravenhage (NL)**
• **VOLKER, Arno Willem Frederik
2595 DA 's-Gravenhage (NL)**

(74) Representative: **V.O.
P.O. Box 87930
2508 DH Den Haag (NL)**

(54) **A NON-CONTACT INSPECTION METHOD AND SYSTEM FOR ESTIMATING A PROPERTY OF ANISOTROPIC MATERIALS**

(57)     The invention relates to non-contact inspection method and system for estimating a property of anisotropic materials. Waves within an anisotropic material are generated, and waves propagating through the anisotropic material are detected in order to obtain a wave field. The detected wave field is transformed to the wavenumber-frequency domain in order to obtain a wavenumber-frequency slice. For each wavenumber-frequency slice, a coordinate transformation is applied to the wavenumber-frequency slice in order to compensate for anisotropic properties in the wavenumber-frequency slice. A property of the anisotropic material is estimated based on the inverse transformed wavenumber-frequency slice.

FIG 3B

**Description**

FIELD OF THE INVENTION

The invention relates to a non-contact inspection method for estimating a property of anisotropic materials. The invention also relates to a non-contact inspection system. Furthermore, the invention relates to a measurement device and the use of the measurement device for non-contact inspection.

BACKGROUND TO THE INVENTION

Inspecting or characterizing materials is important in various industries. For example, it can be used to ensure the integrity of individual components. As an example, in the aerospace sector, where the performance and safety of materials can have profound implications, each component undergoes rigorous nondestructive inspection to detect and identify any defects. Presently, ultrasonic transmission measurements dominate as the primary method for such inspections. This method involves submerging the part in water or, alternatively, projecting a water jet at the panel, with ultrasound then being transmitted through this water jet.

While ultrasonic transmission measurements have become the industry standard, this conventional approach presents a set of inherent challenges. First and foremost, it necessitates the use of water as a coupling medium. This dependency can be impractical in various settings and can introduce complications in the inspection process. Moreover, the method is inherently time-consuming, making the inspection slow and for example causing bottlenecks in production or maintenance schedules.

A further complicating matter is the inspection of small anisotropic panels, typically sized around e.g. 500 x 500 mm or even smaller. Due to their compact dimensions, these panels are particularly susceptible to wave reflections from their edges. Such reflections, when they interfere with the primary wavefront, introduce ambiguities in the measured local wave length at distinct (x,y) positions. This is because waves originating from different directions possess different wavelengths. Consequently, this phenomenon introduces artefacts in the final inspection image. Such artefacts not only distort the inspection results but also jeopardize the method's efficacy. This poses a significant risk of overlooking specific defects, severely constraining the detection capabilities for particular defect types, such as for example porosity.

There is a strong desire to provide for an enhanced non-contact inspection method and system for estimating a property of an anisotropic material. Current methodologies present significant challenges in both application and accuracy, underscoring the need for advancements in this domain.

SUMMARY OF THE INVENTION

It is an object of the invention to provide for a method and a system that obviates at least one of the above mentioned drawbacks.

Additionally or alternatively, it is an object of the invention to improve a non-contact inspection method/system for estimating a property of anisotropic materials.

Additionally or alternatively, it is an object of the invention to provide a more efficient and rapid non-contact inspection method/system for estimating a property of anisotropic materials that reduces or eliminates the artefacts arising from interfering reflections within anisotropic structures.

Additionally or alternatively, it is an object of the invention to provide for a method/system that can improve the wave measurement process in order to enhance defect detection capabilities.

Thereto, the invention provides for a non-contact inspection method for estimating a property of anisotropic materials, the method comprising: generating waves within an anisotropic material; detecting waves propagating through the anisotropic material to obtain a wave field; transforming the detected wave field to the wavenumber-frequency domain in order to obtain a wavenumber-frequency slice; applying, for each wavenumber-frequency slice, a coordinate transformation to the wavenumber-frequency slice in order to compensate for anisotropic properties in the wavenumber-frequency slice; and estimating a property of the anisotropic material based on the inverse transformed wavenumber-frequency slice.

In this method for inspecting anisotropic materials without direct contact, waves are produced within the anisotropic material, and these propagating waves are subsequently detected to obtain a wave field. This detected wave field is then transformed into the wavenumber-frequency domain, yielding a number of wavenumber-frequency slices. For each of these slices, a coordinate transformation is applied to compensate for the inherent anisotropic characteristics observed in the wavenumber-frequency slice. By then inverse-transforming this slice, a property of the anisotropic material can be estimated.

The method employs a coordinate transformation to each wavenumber-frequency slice. This adjustment compensates for the material's anisotropic properties, effectively makes the anisotropic properties appear isotropic. Then, a material property is estimated based on the inverse transformed slice. The method is less prone to artefacts, and also the overall analysis can be simplified. As a result, a more precise inspection of the material can be obtained, eliminating the misleading artifacts that often arise in conventional methods. Anisotropic materials can be assessed in a detailed way. Furthermore, by creating an isotropic representation of anisotropic properties, it allows for a more accurate measurement of properties like thickness. The coordinate transformation, which compensates for the unique anisotropic features, ensures that the results are artifact-free. Anomalies, errors and/or inaccuracies that can arise from not accounting for the material's unique directional properties, can be better avoided. This method can be used in various scenarios. For instance, it can be applied to inspect layered structures such as composites where anisotropic characteristics are prevalent.

A significant advantage of this method lies in its ability to accurately account for and correct the anisotropic characteristics, especially in scenarios where waves reflect off the sides of finite-sized panels. In practical terms, panels or materials that are being tested often have boundaries. Waves, after being generated within the material, may strike these boundaries, reflect back, and interfere with other propagating waves. This leads to locations within the material where waves can propagate in various directions. If the anisotropy correction is not appropriately applied, there is a high likelihood of determining an incorrect wave speed at that particular location. Determining the correct wave speed is crucial, as the system translates this speed to ascertain properties like wall thickness at specific frequencies and locations. Incorrect speed determination can thus lead to flawed characterizations of the material, potentially missing defects or misestimating properties, which can have detrimental consequences in real-world applications. This method's capability to adapt and correct even in the presence of such wave interferences ensures more accurate and reliable evaluations of anisotropic materials.

When evaluating anisotropic materials, having more than two different speeds at a single position can complicate the assessment and lead to inaccuracies. Specifically, if the method calculates a singular speed from multiple distinct wave speeds at one location, the derived wall thickness may be erroneous. This miscalculation can result in the formation of "artifacts" in the measurement outcomes. In this context, artifacts refer to perceived irregularities, such as apparent thickenings or thinnings in the material, which, in reality, do not exist. These inaccuracies can misrepresent the actual physical properties of the material under inspection. Such artifacts not only compromise the integrity of the measurements but can also lead to incorrect interpretations or decisions based on these flawed data. Addressing these artifacts is crucial to ensure the reliability and accuracy of non-contact inspection methods for anisotropic materials.

Optionally, the coordinate transform is configured to convert an anisotropic response of the wavenumber-frequency slice into an isotropic response of the wavenumber-frequency slice.

The applied coordinate transformation is designed to modify the anisotropic response seen in the wavenumber-frequency slice into an isotropic one, meaning it will exhibit uniform properties regardless of the direction of measurement. The characterization of the anisotropic material can be simplified, making it appear as if it's isotropic. This makes subsequent analyses easier and potentially less prone to errors/inaccuracies, as isotropic materials are typically easier to understand and model than their anisotropic counterparts.

Various transformation algorithms or models may be employed, ranging from linear transformations to more complex, adaptive algorithms, to achieve the desired isotropic response.

Optionally, applying the transformation to the wavenumber-frequency slice includes warping a wavenumber coordinate grid in order to make a modulus of the wavenumber-frequency slice response in a desired shape.

The transformation applied to the wavenumber-frequency slice involves adjusting or 'warping' the wavenumber coordinate grid. This warping aims to reshape the modulus of the wavenumber-frequency slice response into a desired format. This warping aids in further refining and correcting the wavenumber-frequency slice, making it better suited for material characterization. This tailored transformation leads to enhanced accuracy in the results.

The coordinate grid warping may be done using different interpolation techniques, and/or by employing artificial intelligence or machine learning algorithms that predict the best-fit shape for the wavenumber-frequency slice.

Optionally, wherein the desired shape is circular.

When adjusting or 'warping' the wavenumber coordinate grid, the target shape for the modulus of the wavenumber-frequency slice response can be circular, such that the response is consistent and isotropic in all directions within the transformed domain.

Optionally, an extent of the warping of the wavenumber coordinate grid is minimized.

The extent of this warping process applied to the wavenumber coordinate grid can be minimized. By doing so, any unnecessary or excessive distortions in the data are avoided, ensuring the highest fidelity and precision in the results obtained from the analysis.

By minimizing the warping, the method ensures that the information derived from the wavenumber-frequency slice remains as true to the original material properties as possible. This accuracy can be important when making subsequent estimations or decisions based on this data, especially in critical applications where material properties have a significant impact.

Furthermore, overcompensating or excessive adjustments during the transformation process can consume additional computational resources and time. By streamlining this process and reducing unnecessary warping, the method can be executed more quickly and efficiently, making it more suitable for real-time or rapid inspections.

Furthermore, when analyzing anisotropic materials, subtle differences in directional properties can be critical. Any excessive modification or alteration of the data, like over-warping, may mask or alter these essential subtleties. The method can maintain a delicate balance: transforming the data enough to compensate for the material's anisotropic nature, but not so much that it introduces other complexities or errors.

In some examples, thresholds for warping may be employed. For example, adaptive grids may be used that limit the extent of warping based on the local characteristics of the data, or implement feedback loops to ensure minimal deviation from the original.

Optionally, the warping of the wavenumber coordinate grid is based on a selectable velocity value, wherein the selectable velocity value is within a range between a minimum and maximum velocity of the dispersion curve.

The warping of the wavenumber coordinate grid is determined based on a selectable velocity value. This value lies within a defined range, which spans from the minimum to the maximum velocity present in the dispersion curve of the anisotropic material. The selectable velocity value, which lies within a range determined by the dispersion curve's minimum and maximum velocities, offers a controlled approach to adjusting the warping, allowing for fine-tuning based on specific material characteristics.

In some examples, the selectable velocity value is based on statistical methods, predictive algorithms, or even allow for manual input for specialized applications.

Optionally, the warping of the wavenumber coordinate grid is based on an average velocity calculated as a mean between a minimum and maximum velocity of a dispersion curve.

The average velocity may be calculated as the arithmetic mean between the minimum and maximum velocities that can be identified within the dispersion curve of the anisotropic material. By using this average velocity, a balanced and representative value is ensured for the transformation process.

Optionally, the method includes going back to the space-frequency domain. In some advantageous examples, a compensation for the deformations of this domain are performed. For instance, after inverse Fourier transform, the spatial domain can be deformed by the transformation, which can be corrected in some advantageous examples.

Optionally, a transformation is performed to map a non-uniform grid in the transform domain back to a uniform grid in the spatial domain in an amplitude preserving manner.

In this transformation step, a non-uniform grid observed in the transform domain can be re-mapped to a uniform grid in the spatial domain, wherein the transformation conserves the amplitude. The integrity of the detected wave information can be maintained, leading to more accurate estimations of the material's properties.

Various mapping techniques may be used for ensuring better grid uniformity and amplitude preservation.

Optionally, a non-uniform inverse Fourier transformation is performed, wherein the non-uniform inverse Fourier transformation includes a Jacobian for preserving amplitudes.

The non-uniform transformation offers flexibility in processing, while the Jacobian ensures that data values remain consistent, leading to results that closely mirror the actual material characteristics.

Optionally, a Radon transformation is performed.

The Radon transformation is a technique used for detecting linear features within data, making it particularly useful in materials analysis where linear defects or features may be present. By introducing the Radon transformation into the method, an additional layer of analysis can be provided, specifically tailored for detecting and understanding linear characteristics within the material. The technical advantage of this transformation is its proficiency in capturing linear features, potentially highlighting defects or irregularities that other methods may overlook.

Optionally, a Direct Velocity Mapping, DVM, processing scheme is applied to produce a thickness map.

A Direct Velocity Mapping (DVM) processing scheme can be employed to derive a thickness map of the anisotropic material. DVM processing scheme used for producing a thickness map can provide a clear and detailed visualization of the anisotropic material's properties. This map offers an effective means to quickly assess and understand the material's thickness distribution.

A DVM processing scheme can generate a phase velocity map. By leveraging a dispersion curve, a correlation between phase velocities and the thickness of the material can be ascertained, thereby enabling the mapping of velocity to thickness. The thickness map can facilitate a rapid and accurate assessment of the material's thickness distribution, thereby contributing to an enhanced understanding of the material's structural attributes. The DVM processing scheme thus presents a systematic methodology for transitioning from phase velocity data, as derived from the dispersion curve, to a comprehensive thickness map, offering an effective means for visualizing and analyzing the structural characteristics of anisotropic materials.

In some examples, other processing schemes may be used, such as gradient-based methods or convolutional neural network-based mapping, to derive a thickness map.

Optionally, the thickness map is used to identify defects or variations in thickness within the anisotropic material.

The thickness map generated using the DVM processing scheme can serve to pinpoint defects or variations in the thickness of the anisotropic material. This capability can be important for quality control, ensuring that the anisotropic material meets desired specifications and standards.

In some examples, this map can be combined with thermal imaging, X-ray imaging, or other defect detection methodologies to enhance accuracy and reliability.

Optionally, the thickness map is compared with a reference thickness map to identify and characterize said defects or variations in thickness.

The acquired thickness map can be juxtaposed with a reference thickness map. This comparison can assist in detecting and characterizing any disparities in thickness or inherent defects in the material.

The comparison allows for the precise identification and characterization of defects or variations in thickness. An improved ability to detect and understand deviations from the expected material behavior or structure can be obtained.

In some examples, machine learning-based comparison methods, automated pattern recognition, or even integrated real-time feedback mechanisms may be employed for immediate corrective actions.

Optionally, a spatial correction process is subsequently performed in order to rectify geometrical deformation in the spatial domain, wherein after estimating a property of the anisotropic material based on the inverse transformed wavenumber-frequency slice, the method further comprises applying a coordinate transformation to the spatial domain to correct geometrical deformation of the spatial domain that occurs as a result of the anisotropy correction in the transform domain.

The spatial correction process may be repeated for or reiterated across numerous frequency components to obtain an average property estimate, which helps in reducing noise, enhancing the accuracy of the estimation. The spatial deformation correction is frequency-dependent. If this correction step is inadequately or inaccurately performed, the frequency slices derived in each iteration may lack coherence when averaged. This inaccuracy could subsequently be detrimental to the property estimation, rendering the non-contact inspection method less reliable or precise. Hence, in some advantageous embodiments, a spatial deformation correction is performed to ensure that the averaging of frequency slices is coherent, thus facilitating a more accurate and reliable estimation of the material properties.

Upon estimating a property of an anisotropic material from the inverse transformed wavenumber-frequency slice, the method can also incorporate a spatial correction process. This process, can amend any geometrical deformation in the spatial domain. Such deformation may emerge as a consequence of the anisotropy correction executed in the transform domain. Hence, it can be ensured that any distortions introduced during the transformation are corrected, leading to an accurate representation of the material's properties.

Optionally, the steps of transforming the detected wave field to the wavenumber-frequency domain in order to obtain a wavenumber-frequency slice and applying a coordinate transformation to the wavenumber-frequency slice in order to compensate for anisotropic properties in the wavenumber-frequency slice are performed per frequency slice to account for the dispersive nature of the phase velocity.

Considering the dispersiveness of phase velocity, both the transformation of the detected wave field into the wavenumber-frequency domain and the subsequent coordinate transformation can be executed for each frequency slice individually. It can be ensured that variations in material properties at different frequencies are captured accurately, leading to a more detailed and precise material characterization.

Different slicing techniques, such as time-frequency slicing or amplitude-frequency slicing, can be employed.

Optionally, the step of applying a coordinate transformation to the wavenumber-frequency slice further comprises determining a transformation parameter set for each wavenumber-frequency slice, the transformation parameter set being selected based on the specific dispersion characteristics identified within the respective frequency slice to thereby allow for a differential compensation of anisotropic properties that can vary with wavenumber-frequency slice due to dispersity in the anisotropic material.

When applying the coordinate transformation to the wavenumber-frequency slice, a unique transformation parameter set can be determined for every wavenumber-frequency slice. This set can be curated based on the specific dispersion characteristics identified within the respective frequency slice, facilitating a differential compensation of anisotropic properties that may vary due to the anisotropic material's dispersive nature.

These parameters, which are chosen based on the specific dispersion characteristics of the slice, allow for differential compensation of varying anisotropic properties. This provides a tailored approach to each slice, ensuring that the method captures the full complexity of the material's behavior.

Optionally, low-frequency lamb waves are generated within the anisotropic material.

By generating low-frequency lamb waves within the material, the method offers a reliable and effective means of probing the anisotropic material. These waves are well-suited for detecting material properties, ensuring that the generated and detected wave information is robust and representative of the material's actual behavior.

Optionally, a sensor array is used to detect an amount of wave energy that radiates into the surrounding air from the ultrasonic waves propagated through the anisotropic material, wherein the method includes back-propagating the recorded wave field at the sensor array to the surface of the anisotropic material under inspection to correct for the radiation angle, such that wave propagation after the back-propagation is in-plane.

The sensor array may provide a fast and cost-effective solution compared to approaches employing lasers, e.g. scanning laser vibrometer. Furthermore, importantly, the sensor array enables a wide frequency band detection, thereby significantly enhancing the characterization/measurement as higher resolution and less noise can be obtained in the image.

Advantageously, multiple excitation sources can be utilized that operate simultaneously. From a technical standpoint, by employing concurrent excitation, the system can capture a richer and more multi-dimensional wave field within the material or component being inspected. Traditional inspection methodologies often encounter complications when waves reflect from the edges of panels, leading to ambiguities in the data and potential misinterpretations. However, the method according to the disclosure effectively addresses this challenge. The edge reflections can be adeptly isolated and compensated for, ensuring that they do not introduce unwanted noise or distortions into the measurements. The simultaneous use of multiple sources, combined with the handling of the reflections, not only improves the accuracy and resolution of the data but also facilitates a faster inspection process, given that more of the material's domain is excited and captured in a single pass. Hence, improved precision and efficiency can be obtained, irrespective of the complexities introduced by the material's geometry or the presence of edge reflections.

To detect the energy of waves that emanate into the ambient air from the ultrasonic waves passing through the anisotropic material, a sensor array can be employed. Following this detection, the recorded wave field at the sensor array undergoes a back-propagation to the anisotropic material's surface. This step can be employed for correcting for the radiation angle, ensuring that post back-propagation, the wave propagation remains in-plane. In this way, the accuracy of the detected wave information can be enhanced.

Backpropagation plays an important role in ensuring the accuracy of wave measurements, especially when the wave field is not directly measured on the material or panel in question, but rather detected by a sensor, such as MEMS, positioned at a distance and separated by air. As waves emanate from the panel, they radiate into the surrounding air, which is where the MEMS sensors capture their data. However, as these waves transition from the panel to the air, they do so at an angle, dictated by Snell's law. This law, which relates the angles of incidence and refraction to the ratios of velocities of waves in two different media, highlights that waves change direction when they move between materials with different refractive indices, such as between the panel and air. Due to the differing propagation speeds and refractive indices, the waves' pathway and properties are altered as they traverse from the panel to the sensor. To counteract these changes and to ensure that the anisotropy correction is accurately applied, it may be important to employ backpropagation. By retracing the waves' paths back to their origin on the panel, errors arising from the angle of refraction and differing propagation mediums can be minimized or eliminated, leading to more reliable and precise measurements.

Backpropagation can thus be important when utilizing an array of sensors (e.g. MEMS microphones) placed at a distance from the panel. This is because, as waves radiate from the panel and traverse through a different medium, like air, they undergo refraction and shift in direction, leading to potential discrepancies in measurements. However, while MEMS-based measurements necessitate backpropagation for accurate wave field evaluation, alternative methods, such as laser techniques, can directly gauge the wave field on the panel itself, eliminating the need for such compensatory steps.

The sensor array may be used to record the radiated wavefield. In some examples, internal signal amplifiers may be provided.

Optionally, a translation system is provided to move the sensor array. The sensory array may be arranged on a sensor head, and the translation system may be configured to move the sensor head. However, it is noted that kinematic inversions are also envisaged. For example, alternatively or additionally, it is also possible to move the anisotropic material (e.g. plate structure).

Optionally, a surface profiler is provided to measure the shape of the part. This optional feature may be used when there is a non-flat part. Optionally, the translation system also is configured to move the optional surface profiler.

When dealing with a surface that is curved, such as a convex one, it may become important to employ a surface profiler. This tool allows for detailed analysis and measurement of the surface's curvature and variations. However, it's worth noting that this profiling step is mainly for the backpropagation process, aiding in accurate wave reconstructions and reflections based on the curvature. Conversely, when it comes to making corrections for anisotropy, the surface's curvature, as gauged by the profiler, doesn't play a role. The anisotropic correction focuses on the material's direction-dependent properties rather than the geometrical nuances of the surface.

Optionally, a data acquisition system is provided to record measurements. In some examples, the data acquisition system is configured to collect environmental conditions such as temperature. For example, a temperature sensor may be arranged to record the temperature. The collected environmental conditions/data may be used to correct the medium properties used in the b ackprop agation.

In the context of back propagation, the role of a temperature sensor may become important, due to its relation with wave speed in air. The speed at which waves propagate in air is intrinsically linked to the ambient temperature. Variations in temperature can result in different propagation speeds, which in turn affects the accuracy of backpropagation calculations. One method to mitigate this effect is to condition the room, maintaining a fixed, controlled temperature. By doing so, the influence of temperature fluctuations on wave speed can be nullified. As such, in a controlled environment where temperature remains consistent, there may be scenarios where the usage of a temperature sensor becomes unnecessary or redundant, ensuring accurate backpropagation without additional temperature-related adjustments.

Optionally, waves propagating through the anisotropic material are detected using a laser vibrometer.

Enhancing detection capabilities, the method employs a laser vibrometer to detect waves that propagate through the material. The use of a laser vibrometer offers a precise, non-contact means of detecting waves, ensuring that the detected wave data is both accurate and free from any contact-induced distortions or artifacts.

Optionally, the anisotropic material is an anisotropic composite panel comprising at least one fiber-reinforced material.

This kind of material possesses unique anisotropic properties, given the directional nature of its reinforcing fibers, making the inspection method particularly beneficial for accurate characterization and assessment.

Optionally, the anisotropic material is selected from a group consisting of carbon fiber composites, glass fiber composites, and aramid fiber composites.

The method according to the disclosure may be used for part/structure/component characterization, damage detection, structural integrity assessment, quality control, maintenance scheduling, lifecycle estimation, fracture detection, corrosion monitoring, weld integrity checks, erosion tracking, wear assessment in mechanical components, pipeline health monitoring, semiconductor package evaluation, solder joint quality assurance, delamination detection in electronics, stability assessments, etc. Various other applications are possible.

According to an aspect, the invention provides for a non-contact inspection system for estimating a property of anisotropic materials, the system comprising: a wave generator configured to generate waves within an anisotropic material; a wave detector configured to detect waves propagating through the anisotropic material in order to obtain a wave field; and a processor configured to: transform the detected wave field to the wavenumber-frequency domain in order to obtain a wavenumber-frequency slice, apply a coordinate transformation to the wavenumber-frequency slice in order to compensate for anisotropic properties in the wavenumber-frequency slice, and estimate a property of the anisotropic material based on the transformed wavenumber-frequency slice.

The system can ensure that the unique directional properties of anisotropic materials are accurately captured, leading to precise property estimations/characterization. Advantageously, the medium properties do not have to be known a priori. The method also works for parts with a non-uniform thickness, provided that other medium properties do not vary. The proposed anisotropy correction deals with reflections from the edges of the part under inspection. Furthermore, the actuator location does not have to be known in order to apply the anisotropy correction. Moreover, the anisotropy correction also works for multiple actuators without knowing their location.

According to an aspect, the invention provides for a non-contact inspection method for evaluating a characteristic of materials, the method comprising: generating waves within a material; capturing the propagation of said waves through the material to derive a wave profile; converting the derived wave profile into a specific domain to procure a domain-specific representation; modifying, for each domain-specific representation, its coordinates to account for material-specific attributes in the domain-specific representation; and deducing a characteristic of the material based on the adjusted domain-specific representation.

Addressing the challenge presented by the anisotropic nature of some materials, such as for example composite panels, primarily resulting from their unique fiber lay-up, a non-contact experimental method is provided for estimating one or more characteristics of the material (e.g. thickness of a specimen) using wave fields. Recognizing the anomalies or artefacts that arise in measurements due to the anisotropic properties, the method focuses on mitigating these discrepancies. By transforming the detected wave field into the wavenumber-frequency domain and then applying specific coordinate transformations, the method compensates for the anisotropy, ensuring a more accurate representation of the characterization of the material (e.g. plate specimen), such as for example its thickness. The method provides a more reliable non-contact technique to inspect/characterize anisotropic materials, minimizing errors introduced by their inherent directional properties.

It will be appreciated that any of the aspects, features and options described in view of the method apply equally to the system and the described measurement device. It will also be clear that any one or more of the above aspects, features and options can be combined.

BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:

Fig. 1 shows a schematic diagram of an embodiment of a system;
Fig. 2 shows a schematic diagram of exemplary wave field snapshots;
Fig. 3a, 3b show a schematic diagram of an exemplary wavenumber slice;

Fig. 4a, 4b show a schematic diagram of a thickness map;

Fig. 5 shows a schematic diagram of an exemplary wavenumber slice;

Fig. 6 shows a schematic diagram of exemplary thickness maps a-f;

Figs. 7a-c show a schematic diagram of exemplary results in the spatial domain; and

Fig. 8 shows a schematic diagram of a method.

DETAILED DESCRIPTION

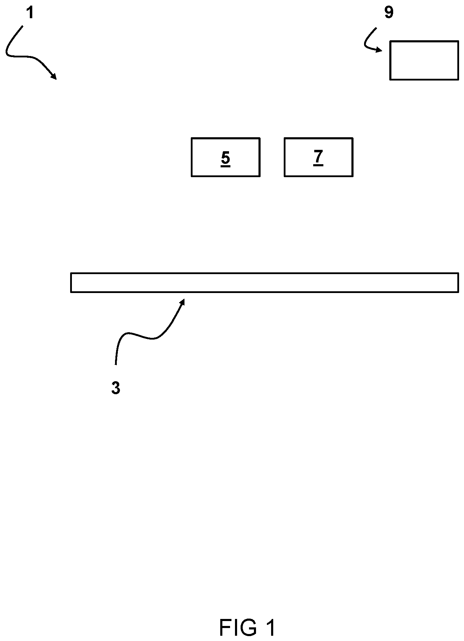

Fig. 1 shows a schematic diagram of an embodiment of a system 1 for non-contact inspection. The system 1 is configured to estimate a property of anisotropic materials 3. The system 1 comprises a wave generator 5 configured to generate waves within an anisotropic material 3. Further, the system 1 comprises a wave detector 7 that is configured to detect waves propagating through the anisotropic material 3 in order to obtain a wave field. The wave generator 5 and wave detector 7 are depicted as two separate units. However, in some examples, the wave generator 5 and wave detector 7 may be integrated in a single unit. For instance, an acoustic arrangement may be employed. Furthermore, the system 1 includes a processor 9 which is configured to transform the detected wave field to the wavenumber-frequency domain in order to obtain a wavenumber-frequency slice, apply a coordinate transformation to the wavenumber-frequency slice in order to compensate for anisotropic properties in the wavenumber-frequency slice, and estimate a property of the anisotropic material based on the transformed wavenumber-frequency slice. It will be appreciated that the different components of the system 1 may be integrated in a single arrangement, or a coupled arrangement. Various embodiments of a measurement device can be designed.

In some examples, the system 1 can be used for inspection of for example fiber composite panels. Due to the fiber lay-up in these composite panels, the material becomes anisotropic. An anisotropic dispersion curve may be determined or provided. In the dispersion curve, measured velocities as function of the in-plane propagation direction (angle) and frequency can be illustrated. The dispersion curves can be determined experimentally, for example from the same data as recorded by the wave detector, and/or computationally (e.g. using a numerical or computational model) for a known structure (e.g. fiber composite panel with known lay-up).

The system 1 provides for a fast way for non-contact inspection of anisotropic materials. In some examples, an array of sensors (e.g. MEMS) are employed, wherein low-frequency lamb-waves are used to fill a composite panel with ultrasonic waves. These waves have the unique property that their velocity depends on the local thickness of the panel. A small amount of wave energy radiates into the surrounding air and can be detected by a MEMS-microphone array. The recorded wave field can be back-propagated to the surface, to correct for differences in the radiation angle. In case of an isotropic material, the local wave length can then be measured for each frequency component of interest. From these two parameters, the local phase velocity can be calculated. For example, a Direct Velocity Mapping (DVM) can be used. Using the known dispersion relation of the material under test, the local thickness can then be obtained. A wide frequency range can be used to minimize noise in the individual images per frequency component.

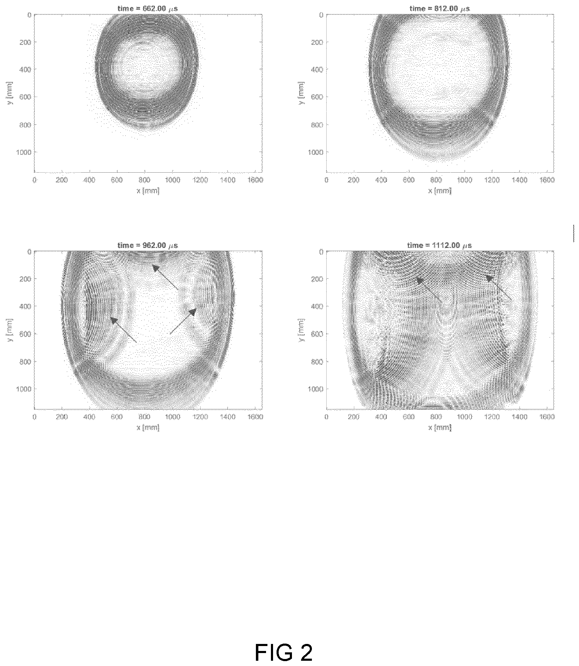

Fig. 2 shows a schematic diagram of exemplary wave field snapshots. The wave field snap shots show the interference of reflections from the panel edges. Because the reflections are coming from different directions, their local wave length will be different due to the anisotropy.

In some examples, a sensor array is used for detecting an amount of wave energy that radiates into the surrounding air from the ultrasonic waves propagated through the anisotropic material. The recorded wave field at the sensor array can be back-propagated to the surface of the anisotropic material under inspection to correct for the radiation angle, such that wave propagation after the back-propagation is in-plane. In fig. 2, an example of the wavefield snapshots before back propagation to the surface is shown. Consequently the wave propagation can be considered to be purely in-plane, i.e., $k_z = 0 \, m^{-1}$.

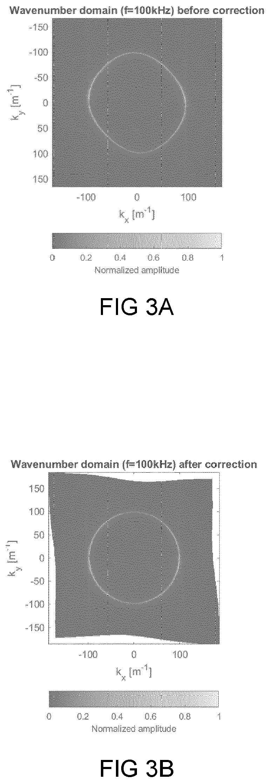

Fig. 3a, 3b show a schematic diagram of an exemplary wavenumber slice. Figs. 3a, 3b give an example of wavenumber slice at one frequency (exemplary 100 kHz). In fig. 3a, the medium anisotropy is clearly visible by the non-circular shape before correction. In fig. 3b, after correction the non-circular shape is transformed into a circular shape.

When transforming a frequency slice to the wavenumber domain ($k_x, k_y$), the wave field is decomposed into plane wave components, see fig. 3a. The phase velocity can be measured in this domain for each propagation direction using the modulus of the transform. The phase velocity is given by:

$$c_{ph}(f, \theta) = \frac{2\pi f}{k(\theta)},$$

with $k = \sqrt{k_x^2 + k_y^2}$ and the propagation direction $\theta$ given by:

$$\theta = \tan^{-1}\frac{k_y}{k_x}.$$

That the medium is anisotropic can be seen from the fact that the response is non-circular. In order to transform the measurements from anisotropic response to an isotropic response, a stretch or contraction to the domain need to be applied. The domain is transformed by stretching or contracting the $(k_x,k_y)$-grid such that the modulus of the response becomes circular, see fig. 3b. In principle, any velocity between the minimum and maximum velocity of the dispersion curve can be chosen. However, in some advantageous examples, the average over the minimum and maximum velocity is chosen, such that the stretch or contraction of the domain is minimized. The diameter of the circle may be intrinsically tied to the speed at which a phenomenon occurs. For improved results, it can be important to maintain the circle's size as close to its original dimensions as possible. Overextending and enlarging the circle too much necessitates some form of interpolation to account for the excess size, which can introduce further inaccuracies into the analysis. Furthermore, as the domain size or scope of the circle expands, there is a direct impact on the computational demands. A larger domain typically translates to longer computation times, adding another layer of complexity to the process.

In case of a contraction, zero-padding in the wavenumber domain can be applied to avoid edge effects. Zero-padding is a technique in signal processing, where you add zeros to the end of a sequence or signal. Based on this chosen velocity $c_{ph,0}$ a coordinate transform is performed from: $\left(k_x, k_y\right) \rightarrow \left(k'_x, k'_y\right)$. This so-called mapping is done by:

$$k'_x = \alpha(\theta)k \cos \theta,$$

and

$$k'_y = \alpha(\theta)k \sin \theta,$$

with $\alpha(\theta) = \dfrac{c_{ph}(f,\theta)}{c_{ph,0}(f)}$

The $\alpha(\theta)$ provides for an angle-dependent scaling. The process of deforming a circle, whether through contraction or stretching, can be effectively managed using a dispersion curve. A dispersion curve serves as an important tool in understanding the wave speed, which is contingent upon both the frequency of the wave and its angle of incidence. The angle dependency arises specifically because of the anisotropic nature of the material or medium. Anisotropy, with its directionally dependent properties, ensures that wave speeds vary depending on the angle of wave propagation. Therefore, a dispersion curve becomes an important instrument in visualizing and comprehending how these factors intertwine, allowing for precise adjustments to transform a deformed circle back into its original, circular shape.

The dispersion curve can be extracted from the measurement. After the coordinate transform, the wavenumber domain is no longer equidistantly sampled. Therefore, correctly transforming back to the space-frequency domain may involve a non-uniform inverse Fourier transform. The Jacobian can be included in the inverse Fourier transform to ensure amplitudes are preserved correctly. The Jacobian can correspond to the coordinate transform is given by $\alpha(\theta)^2$.

The manifestation of anisotropy is depicted by the distorted/deformed circle concept (cf. non-circular response). Anisotropic materials have direction-dependent properties, and this variance is captured when observing wave propagation through them. The distorted circle represents this anisotropy effect; the distance from its center varies based on the wave's direction of propagation, signifying differences in wavenumber and consequently in speed. In a contrasting scenario, for isotropic materials, wave propagation speed remains consistent in all directions. This uniformity is represented by a perfect circle, signifying that the velocity remains constant regardless of the direction. This isotropic behavior holds true irrespective of where the actuator is positioned, even if located at the center point (0, 0). Additionally, the geometrical shape of the material does not alter this circle representation. In essence, the circle embodies the homogeneity of isotropic materials, while the distorted circle captures the nuanced, direction-dependent nature of anisotropic materials.

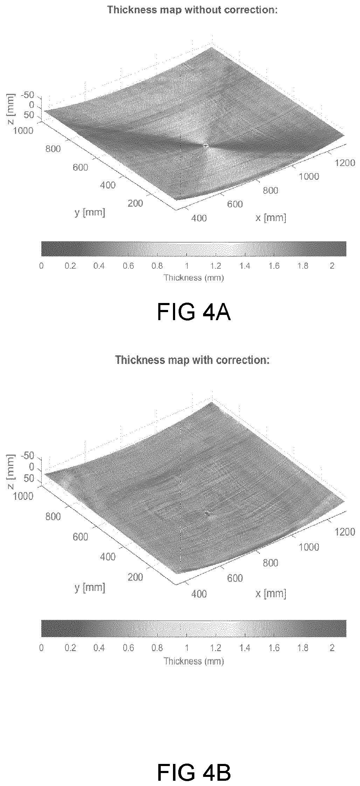

Fig. 4a, 4b show a schematic diagram of a thickness map.

In fig. 4a, an exemplary DVM inspection image is shown of an anisotropic composite panel without anisotropy correction applied to the data. Clearly, artefacts caused by not accounting for anisotropy in the processing can be seen. These artefacts do not occur in a similar image obtained by employing the anisotropy correction step according to the disclosure.

The structure used in this example exhibits anisotropic properties, meaning its material characteristics vary depending on the direction. Interestingly, while the plate structure used in this example has a consistent wall thickness throughout, the measurements seem to suggest otherwise due to the inherent anisotropy. This misleading representation manifests as visible artifacts on the plate's surface, discernible as variations in coloration (cf. grey value). These discrepancies present themselves as both dark and light regions.

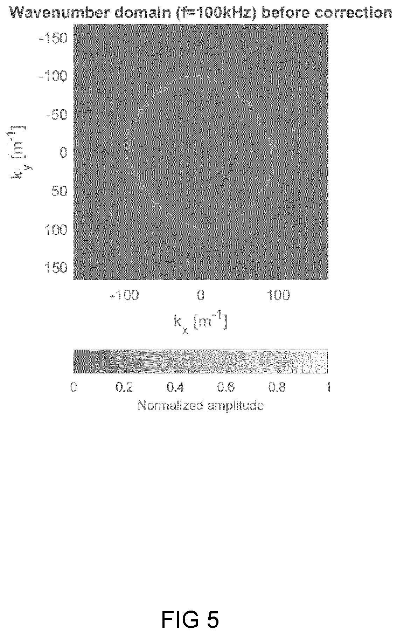

Fig. 5b shows an exemplary DVM inspection image of an anisotropic composite panel with anisotropy correction applied to the data. The artefacts cause by anisotropy are no longer visible.

In some examples, after the non-uniform inverse Fourier transform, the conventional DVM-processing scheme is applied to transform measurements into a thickness map, see fig. 5b. A property of the Fourier transform is that coordinate transform of the wavenumber domain results in a coordinate transform of the spatial domain. Therefore, after DVM processing the data must be mapped back to the original spatial grid.

In summary, the anisotropy correction can be applied after the measured data is back-propagated to the surface. For example, this can be done by the following steps:

1. Uniform 2D Fourier transform to wavenumber domain
2. Coordinate transform of the wavenumber domain
3. Inverse non-uniform 2D Fourier transform to spatial domain
4. DVM-processing
5. Coordinate transform of the spatial domain

Steps 1-3 can be understood as the anisotropy correction, and step 5 can be considered as the spatial correction. This can be repeated for several frequencies and a final image can be a composition of multiple frequency results in order to enhance signal to noise ratio.

The process in steps 1 through 3 can be executed across a range of frequencies to ameliorate the signal-to-noise ratio in the final composited image. By traversing through a spectrum of frequencies, each iteration may unveil varying dimensions of subsurface structures, thereby accumulating a more enriched depiction of the subsurface. The subsequent amalgamation of the outcomes obtained from these disparate frequencies may ultimately culminate in a final image that is enhanced in terms of its clarity and fidelity. This multifrequency approach not only facilitates a superior signal extraction amidst a noisy backdrop, but also enhances the detection of finer subsurface details, which in turn, significantly augments the accuracy and the robustness of the final imaging. Through this iterative frequency-based anisotropy correction, the subsurface anisotropic properties are more precisely delineated, paving the way for a more robust and accurate interpretation of the subsurface measurement.

The phase-velocity is not only anisotropic, but also dispersive, i.e. varying with frequency. Therefore, steps 1-5 are done per frequency slice.

Fig. 5 shows a schematic diagram of an exemplary wavenumber slice. More particularly, a wavenumber slice of fig. 3a is shown with the tracked phase-velocity curve superimposed on the data.

The dispersion curve may be calculated in various ways.

In some examples, the dispersion curve is extracted from the measurement itself. For examples, a curve-tracking optimization algorithm may be used for extracting the angle-dependent phase-velocity per frequency slice. In fig. 5, the curve obtained with such an algorithm is superimposed on the measured data from fig. 3a. To be able to effectively handle noise, the optimization can be tuned to enforce a certain degree of smoothing. For this approach no a-priori information is required.

In some examples, the dispersion curve is calculated using full wave field modelling method using the material lay-up and single layer elastic properties. A curve-tracking algorithm can also be applied to data obtained with full wavefield modelling, e.g. finite difference modelling. The advantage of this approach is that the modelled data is noise free, but the disadvantage is that a priori information of the material lay-up and single layer elastic properties are required.

In some examples, the dispersion curve is calculated using a semi-analytic approach using the material lay-up and single layer elastic properties. This approach may involve calculating the dispersion curves directly by solving a set of equations that describe the continuity conditions for wave-propagation in a multi-layered anisotropic medium. In the global matrix method, dispersion-curves are a direct output of this method. A disadvantage may be that a priori information of the material lay-up and single layer elastic properties are required. These properties are often known with limited accuracy, which can make the method in the end less accurate.

In some examples, the dispersion curve is calculated employing approximate method using a homogenization scheme, where the material lay-up and single layer elastic properties are averaged. This is an approximation of the previously described semi-analytical approach for a multilayer system. The material lay-up and elastic properties of the multi-layer system are averaged to single layer properties such that the dispersion curves can be calculated using a semi-analytical model of a single layer. This approach is computational more efficient and more stable than its semi-analytical multilayer variant. However, a disadvantage may be that the accuracy of the dispersion curves is less compared to the semi-analytical multilayer approach. Advantageously, using a weighted averaging scheme the lower accuracy can be mitigated to some extent.

The best approach for determining the dispersion curve can depend on the amount of a-priori information and its uncertainties.

In the above examples, a step-by-step instruction of the algorithm has been given based on a real-data example of a fuselage skin with uniform thickness. However, it will be appreciated that the method also works for parts with a non-uniform thickness. Two exemplary datasets will illustrate this, one with the actuator located in the middle and one with the actuator located in the corner. In this example, full wave field modelling is used to generate both datasets within a frequency band of 40-160 kHz. The model consist of a 12-layer composite material with a circular area with a thickness of 2.1 mm in a circle located in the center surrounded by a square area with a thickness of 1.7 mm.

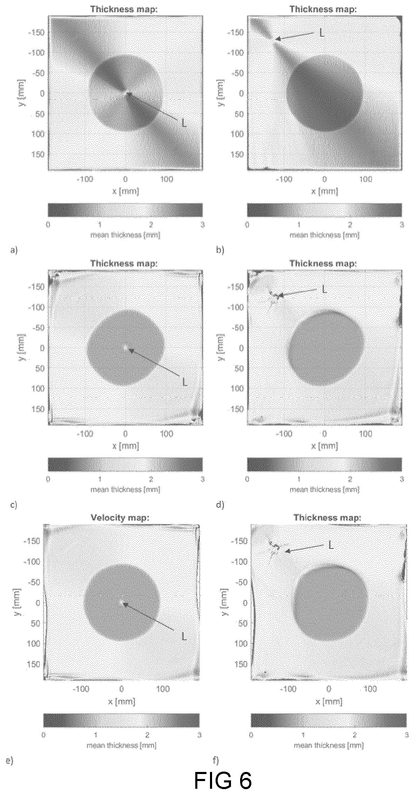

Fig. 6 shows a schematic diagram of exemplary thickness maps a)-f).

Figure 6 a) b) show the DVM thickness images without anisotropy correction for the modelled data. The actuator locations are indicated by L. The angle-dependent thickness caused by the anisotropy of the material is clearly visible. The direction of wave-propagation depends on the source location, and therefore, results in a different thickness image for the two different source locations. After anisotropy correction, see fig. 6 c)-d), the thickness of the circle and outer area are as expected for this model. Except for the actuator location where some artifacts are created. In some examples, advantageously, the actuator is places outside the area under inspection to avoid this type of artefact.

Note that no information is used about the location of the actuator(s). Therefore, the anisotropy correction can even be successfully applied to measurements obtained with multiple actuators.

Fig. 6 c)-d) also show that the shape of the circle is deformed, which is a consequence of the coordinate transform of the wavenumber domain. This can be corrected to ensure correct imaging of geometrical shapes. The result of this geometrical correction is shown in Fig. 6 e)-f).

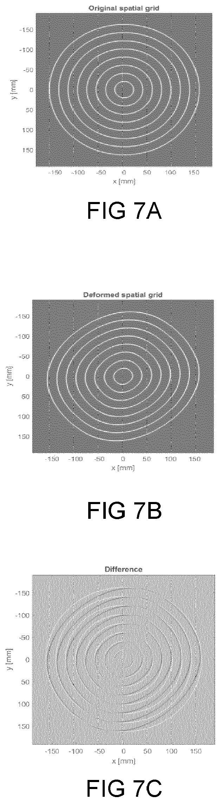

The geometrical correction can be obtained by applying the same coordinate transform on a geometrical feature, this is shown in Fig. 7a-c. The deformation in the spatial domain can be determined by analyzing set of concentric circles (or any other geometrical shape) around the origin of the coordinate system.

The examples in fig. 6 e)-f) show that the correct circular shape is now recovered. Some small differences remain, which are attributed to small errors in the dispersion curve.

Fig. 7a-c shows a schematic diagram of exemplary results in the spatial domain. The effect of the coordinate transform of the wavenumber domain is illustrated by a set of concentric circles in the spatial domain. In fig. 7a, the original geometrical shape is a set of concentric circles. In fig. 7b, the concentric circles become deformed in the spatial domain due to the coordinate transform of the wavenumber domain. In fig. 7c, the difference between the input and output grid is shown, which can be used to determine the spatial coordinate transform.

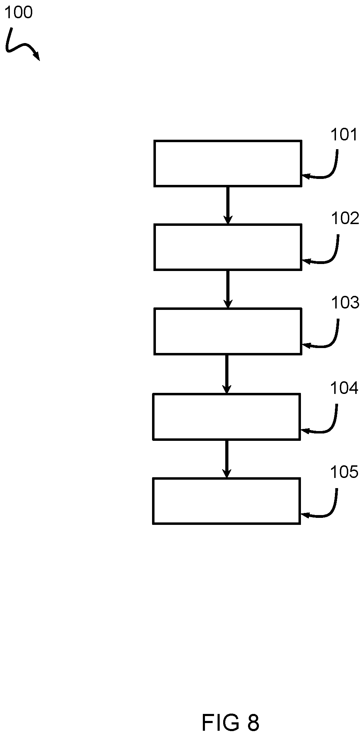

Fig. 8 shows a schematic diagram of a non-contact inspection method 100 for estimating a property of anisotropic materials. In a first step 101, waves within an anisotropic material are generated. In a second step 102, waves propagating through the anisotropic material are detected so as to obtain a wave field. In a third step 103, the detected wave field is transformed to the wavenumber-frequency domain in order to obtain a wavenumber-frequency slice. In a fourth step 104, for each wavenumber-frequency slice, a coordinate transformation is applied to the wavenumber-frequency slice in order to compensate for anisotropic properties in the wavenumber-frequency slice. In a fifth step 105, a property of the anisotropic material is estimated/determined based on the inverse transformed wavenumber-frequency slice.

Advantageously, there's no prerequisite to know the medium properties beforehand. This divergence from standard practices ensures greater flexibility during inspections.

Furthermore, the method's versatility is further emphasized as it remains effective for parts with non-uniform thickness, under the condition that other medium properties remain consistent. This increases its applicability across various scenarios.

Also, the anisotropy correction capability can adeptly manage reflections from the edges of the part being inspected. This ensures clarity and precision in the inspection results.

In what can be considered a significant advancement, the location of the actuator is not required to be known in order to execute the anisotropy correction. This facilitates a smoother inspection process and reduces preparatory efforts.

Extending its adaptability even further, the anisotropy correction is proficient enough to handle multiple actuators concurrently, all the while not necessitating knowledge of their specific locations. This feature undoubtedly elevates the method's efficiency and scope of application.

It will be appreciated that the anisotropic material can be a structure or a part under investigation. It can have various forms, shapes and dimensions. In some examples, the anisotropic material is a plate structure. Hover, it can also have various other arrangements.

It will be appreciated that lamb waves are waves that propagates along the interface between differing media, for example as the result of an acoustic source. Lamb waves along the surface of a material, this means they can travel relatively long distances with relatively low energy loss, making them ideal for inspecting large structures. Another important feature of Lamb waves is that they are dispersive, meaning their velocity depends on their frequency. This allows the user to control the penetration depth and resolution of the wave, which can be useful in detecting different types of defects.

One type of lamb waves is symmetric modes. The displacement of the particles in the wave is symmetric about the midplane of the plate. The lowest order symmetric mode is the S0 mode.

Another type of lamb waves is anti-symmetric modes. The displacement of the particles is anti-symmetric about the midplane. The lowest order anti-symmetric mode is the A0 mode, also known as the fundamental flexural mode.

By analyzing the propagation and scattering of Lamb waves, it is possible to detect and locate flaws such as cracks or corrosion within a structure, and even characterize the thickness of a structure.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The term "and/or" includes any and all combinations of one or more of the associated listed items. The mere fact that certain measures are recited in mutually different claims does not indicate that a combination of these measures cannot be used to an advantage.

## Claims

1. A non-contact inspection method for estimating a property of anisotropic materials, the method comprising:

   generating waves within an anisotropic material;
   detecting waves propagating through the anisotropic material to obtain a wave field;
   transforming the detected wave field to the wavenumber-frequency domain in order to obtain a wavenumber-frequency slice;
   applying, for each wavenumber-frequency slice, a coordinate transformation to the wavenumber-frequency slice in order to compensate for anisotropic properties in the wavenumber-frequency slice; and
   estimating a property of the anisotropic material based on the inverse transformed wavenumber-frequency slice.

2. The method according to claim 1, wherein the coordinate transform is configured to convert an anisotropic response of the wavenumber-frequency slice into an isotropic response of the wavenumber-frequency slice.

3. The method according to claim 1 or 2, wherein applying the transformation to the wavenumber-frequency slice includes warping a wavenumber coordinate grid in order to make a modulus of the wavenumber-frequency slice response in a desired shape.

4. The method according to claim 3, wherein an extent of the warping of the wavenumber coordinate grid is minimized.

5. The method according to claim 4, wherein the warping of the wavenumber coordinate grid is based on a selectable velocity value, wherein the selectable velocity value is within a range between a minimum and maximum velocity of the dispersion curve.

6. The method according to any one of the preceding claims, wherein a transformation is performed to map a non-uniform grid in the transform domain back to a uniform grid in the spatial domain in an amplitude preserving manner.

7. The method according to any one of the preceding claims, wherein a Direct Velocity Mapping, DVM, processing scheme is applied to produce a thickness map.

8. The method according to claim 7, wherein the thickness map is used to identify defects or variations in thickness within the anisotropic material.

9. The method according to claim 8, wherein the thickness map is compared with a reference thickness map to identify and characterize said defects or variations in thickness.

10. The method according to any one of the preceding claims, wherein a spatial correction process is subsequently performed in order to rectify geometrical deformation in the spatial domain, wherein after estimating a property of the anisotropic material based on the inverse transformed wavenumber-frequency slice, the method further comprises applying a coordinate transformation to the spatial domain to correct geometrical deformation of the spatial domain that occurs as a result of the anisotropy correction in the transform domain.

11. The method according to any one of the preceding claims, wherein the steps of transforming the detected wave field to the wavenumber-frequency domain in order to obtain a wavenumber-frequency slice and applying a coordinate transformation to the wavenumber-frequency slice in order to compensate for anisotropic properties in the wavenumber-frequency slice are performed per frequency slice to account for the dispersive nature of the phase velocity.

12. The method according to any one of the preceding claims, wherein the step of applying a coordinate transformation to the wavenumber-frequency slice further comprises determining a transformation parameter set for each wavenumber-frequency slice, the transformation parameter set being selected based on the specific dispersion characteristics identified within the respective frequency slice to thereby allow for a differential compensation of anisotropic properties that can vary with wavenumber-frequency slice due to dispersity in the anisotropic material.

13. The method according to any one of the preceding claims, wherein low-frequency lamb waves are generated within the anisotropic material.

14. The method according to any one of the preceding claims, wherein a sensor array is used to detect an amount of wave energy that radiates into the surrounding air from the ultrasonic waves propagated through the anisotropic material, wherein the method includes back-propagating the recorded wave field at the sensor array to the surface of the anisotropic material under inspection to correct for the radiation angle, such that wave propagation after the back-propagation is in-plane.

15. The method according to any one of the preceding claims, wherein waves propagating through the anisotropic material are detected using a laser vibrometer.

16. A non-contact inspection system for estimating a property of anisotropic materials, the system comprising:

   a wave generator configured to generate waves within an anisotropic material;
   a wave detector configured to detect waves propagating through the anisotropic material in order to obtain a wave field;
   a processor configured to:

   transform the detected wave field to the wavenumber-frequency domain in order to obtain a wavenumber-frequency slice, apply a coordinate transformation to the wavenumber-frequency slice in order to compensate for anisotropic properties in the wavenumber-frequency slice, and estimate a property of the anisotropic material based on the transformed wavenumber-frequency slice.

FIG 1

FIG 2

FIG 3A

FIG 3B

Thickness map without correction:

FIG 4A

Thickness map with correction:

FIG 4B

Wavenumber domain (f=100kHz) before correction

FIG 5

FIG 6

FIG 7A

FIG 7B

FIG 7C

100

101

102

103

104

105

FIG 8

Europäisches
Patentamt
European
Patent Office
Office européen
des brevets

# EUROPEAN SEARCH REPORT

Application Number

**EP 23 20 2454**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/207634 A1 (TNO [NL])<br>6 October 2022 (2022-10-06)<br>* page 1, line 1 – page 5, line 17 *<br>* page 6, line 6 – page 9, line 5; figures *<br>* page 21, line 7 – line 16 * | 1-16 | INV.<br>G01N29/04<br>G01N29/34<br>G01N29/46 |
| A | WO 2022/189770 A1 (UNIV COLLEGE CARDIFF CONSULTANTS LTD [GB])<br>15 September 2022 (2022-09-15)<br>* page 1, line 1 – page 18, line 14; figures * | 1-16 | |
| A | KUDELA PAWEL ET AL: "Elastic constants identification of fibre-reinforced composites by using guided wave dispersion curves and genetic algorithm for improved simulations",<br>COMPOSITE STRUCTURES, ELSEVIER SCIENCE LTD, GB,<br>vol. 272, 27 May 2021 (2021-05-27),<br>XP086700720,<br>ISSN: 0263-8223, DOI:<br>10.1016/J.COMPSTRUCT.2021.114178<br>[retrieved on 2021-05-27]<br>* the whole document * | 1-16 | |

**TECHNICAL FIELDS SEARCHED (IPC)**

G01N

The present search report has been drawn up for all claims

| Place of search | Date of completion of the search | Examiner |
|---|---|---|
| The Hague | 28 February 2024 | Savage, John |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**

**ON EUROPEAN PATENT APPLICATION NO.**      EP 23 20 2454

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2024

| Patent document cited in search report | Publication date | Patent family member(s) | Publication date |
|---|---|---|---|
| WO 2022207634 A1 | 06-10-2022 | EP 4067894 A1 | 05-10-2022 |
| | | EP 4314800 A1 | 07-02-2024 |
| | | WO 2022207634 A1 | 06-10-2022 |
| WO 2022189770 A1 | 15-09-2022 | NONE | |

EPO FORM P0459

For more details about this annex : see Official Journal of the European Patent Office, No. 12/82